# EUROPEAN PATENT APPLICATION

(11) **EP 2 450 900 A1**
(43) Date of publication of application: **09.05.2012**
(21) Application number: 10793834.2
(22) Date of filing: 28.06.2010
(51) Int. Cl.: G11B 27/10, G11B 20/10, G11B 27/00

(54) **DISC PLAYBACK DEVICE AND DISC PLAYBACK METHOD**

(30) Priority: 29.06.2009 JP 2009153394
(71) Applicant: Panasonic Corporation, Kadoma-shi Osaka 571-8501 (JP)
(72) Inventor: KAWATO, Koji, Osaka-shi Osaka 540-6207 (JP); HIRAMATSU, Yoshinori, Osaka-shi Osaka 540-6207 (JP)
(74) Representative: Grünecker, Kinkeldey, Stockmair & Schwanhäusser
(86) International application number: PCT/JP2010/004275
(87) International publication number: WO 2011/001661

(57) **Abstract**

Disclosed is a disc playback apparatus and disc playback method that make it possible to automatically start playing back content such as a BD-J title of a BD-ROM disc, especially the main body of a movie or similar work. In a disc playback apparatus (100) to play back content automatically, when a disc playback operation starts, a menu detecting means (17) analyzes the structure of a movie playlist and decides that a menu state is present when the same play item is repeated a plurality of times. A button selecting executing means (18) executes a button selection when the menu detecting means (17) decides that a menu state is present.

## Description

### Technical Field

The present invention relates to a disc playback apparatus for reading data that is recorded on a recording medium such as a BD-ROM (Blu-ray-Read-Only-Memory) and relates to a disc playback method.

### Background Art

Upon use of a DVD-ROM playback apparatus in a vehicle-mounted or similar environment, starting a content playback automatically when starting a disc playback operation -- that is, when inserting a disc or when turning power on, for example -- has been proposed (see, for example, patent literature 1).

For example, when a DVD-video disc playback operation starts, an enter command is input upon detecting a transition to a menu state, and furthermore an enter command is input upon a transition to a lower layer menu, there by making provision to start a content playback operation automatically. By this means, without requiring a user to perform selection and input operations on a menu screen, an automatic content playback is made possible.

In recent years, two protocols, namely HDMV mode and BD-J mode, have been investigated for a BD-ROM disc playback apparatus, which is starting replacing a DVD-ROM playback apparatus. To put in simple terms, HDMV mode is an improvement on the video and sound/voice codec specifications of conventional DVDs, and allows use of high-resolution video and high quality audio. Application specifications and manufacturing process are the same as conventional DVDs. BD-J mode refers to a technology for playing back one package (hereinafter "virtual package") that is formed by combining video data recorded in a BD-ROM and video or other data recorded in a recording medium other than a BD-ROM.

### Citation List

### Patent Literature

PTL 1: Japanese Patent Application Laid-Open No. 2002-352567

### Summary of Invention

### Technical Problem

The top menu of a BD-ROM disc is prescribed, by a standard, to assign "0" as a title number. With an HDMV mode title that is used in HDMV mode, it is possible to know a title number that is being played back, so that whether a transition to a menu screen has been made can be decided by checking whether a title number is 0.

On the other hand, with a BD-J mode title that is used in BD-J mode, it is not possible to know a title number, and so there is a problem that, since it is not possible to detect a transition to a menu screen, a content playback cannot be started automatically.

It is therefore an object of the present invention to provide a BD-ROM disc playback apparatus and disc playback method that make it possible to automatically start playing back content such as a BD-J title of a BD-ROM disc, especially the main body of a movie or similar work.

### Solution to Problem

In order to solve the above problem, the first aspect of the present invention is directed to a disc playback apparatus that plays back content automatically. This disc playback apparatus of the present invention has a menu detecting section that analyzes the structure of a movie playlist when a disc playback operation starts and decides that a menu state is present when the same play item is repeated a plurality of times, and a button selection executing section that automatically executes a button selection when the menu detecting section decides that a menu state is present.

A second aspect of the present invention is directed to a disc playback method for playing back content automatically. This disc playback method of the present invention includes a menu detecting step of analyzing the structure of a movie playlist when a disc playback operation starts and deciding that a menu state is present when the same play item is repeated a plurality of times, and a button selection executing step of automatically executing a button selection when a menu state is decided to be present in the menu detecting step.

### Advantageous Effects of Invention

The present invention provides a BD-ROM disc playback apparatus and disc playback method that make it possible to automatically start playing back content such as a BD-J title of a BD-ROM disc, especially the main body of a movie or similar work.

### Brief Description of Drawings

FIG. 1 is a block diagram showing a disc playback apparatus according to an embodiment of the present invention;
FIG.2 is a block diagram showing software according to an embodiment of the present invention;
FIG.3 shows a BD-ROM configuration according to an embodiment of the present invention;
FIG.4 shows relationships between index.bdmv files and titles according to an embodiment of the present invention;
FIG.5 is a flowchart for explaining disc playback apparatus operations according to an embodiment of the present invention; and
FIG.6 shows a structure of a movie playlist according to an embodiment of the present invention.

### Description of Embodiments

Now, a disc playback apparatus according to an embodiment of the present invention will be described below with reference to the accompanying drawings.

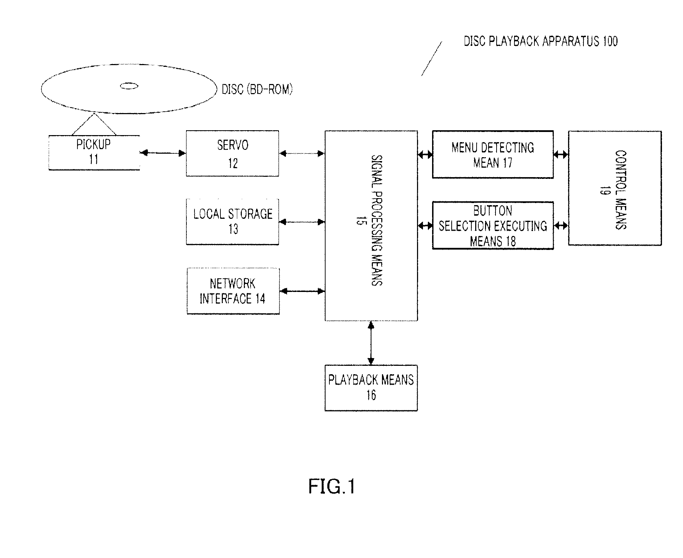

FIG.1 is a block diagram showing disc playback apparatus 100 according to an embodiment of the present invention.

Disc playback apparatus100 has pickup 11, servo 12, local storage 13, network interface 14, signal processing means 15 and playback means 16.

Pickup 11 is a means for acquiring data from disc 10. As shown in FIG. 1, disc 10 is most commonly a BD-ROM (or hereinafter may be referred to as "BD"), but could be a DVD-ROM or other recording mediums. The present embodiment will be described primarily dealing with an AV application for playing back AV content.

Servo 12 is an apparatus for controlling pickup 11. Pickup 11 may be controlled to perform seeking and focus adjustment, to acquire desired data from disc 10. Data acquired from disc 10 is sent to signal processing means 15.

Data from disc 10 is not the only data to be processed in signal processing means 15, and, for example, data that is saved in local storage 13 and data that is downloaded from a network via network interface 14 are also included. Signal processing means 15 is a means for processing these data and allowing playback means 16 to be able to play back AV content and others.

Menu detecting means 17 detects a menu state from the output of signal processing means 15 and tells the detected menu state to control means 19. Usually a plurality of buttons are displayed on a menu screen, so that a user select a button, executes a button selection, and thereby moves onto a subsequent state according to the selected button. Also, although general discs are configured to play back a menu screen shortly after a disc is inserted, with the majority of these, buttons for playing back the main body of a movie or similar work are selected in advance at the time a menu screen is played back.

Consequently, when a change to a menu state is reported to control means 19 as described above, the main entity side (i.e. player) is able to transition from a menu screen to a main body playback by automatically executing a button selection by means of button selection executing means 19. The range of application covers devices that assume a menu state based on player operation specifications after acquiring a table even if there is not "First Playback."

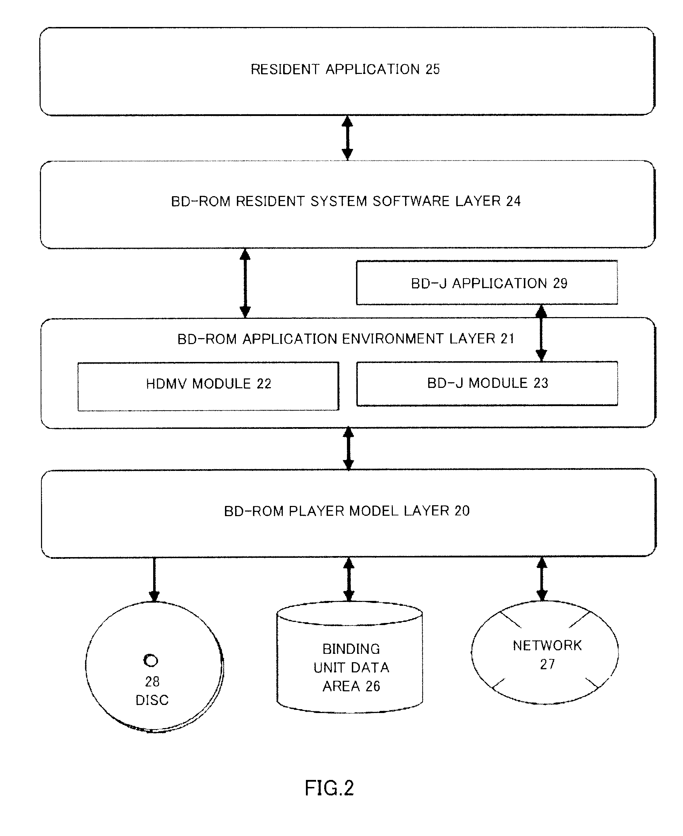

Next, FIG.2 shows detailed block diagram of software in signal processing means 15.

BD-ROM player model layer 20 prescribes how to decode AV streams provided from disc 28, binding unit data area 26 and network 27. Also, there are times BD-ROM application environment layer 21 accesses disc 28, binding unit data area 26 and network 27, and BD-ROM player model layer 20 provides a means for this.

BD-ROM application environment layer 21 is where AV stream playback procedures and stream control procedures are executed. BD-ROM application environment layer 21 has HDMV module 22 and BD-J module 23, and these modules implement the playback procedures and control procedures in different methods.

HDMV module 22 forms an HDMV title that is controlled by operating a scenario program in which a scenario for changing a playback on a dynamic basis is written.

BD-J module 23 forms a BD-J title that is played back by performing a control in BD-J application 29 using a virtual Java^{™} machine.

BD-ROM resident system software layer 24 receives content of user operation from resident application 25 and decides whether that operation is acceptable. If it is acceptable, BD-ROM resident system software layer 24 decides to which one of HDMV module 22 a BD-J module 23 to send a report, based on the kind of a title that is being played back.

Resident application 25 provides a graphic interface and so forth to receive user operation, and reports this to BD-ROM resident system software layer 24.

BD-J application 29 is able to access binding unit data area 26 using a Java^{™} IO package. Consequently, data is written in binding unit data area 26 during BD-J title mode.

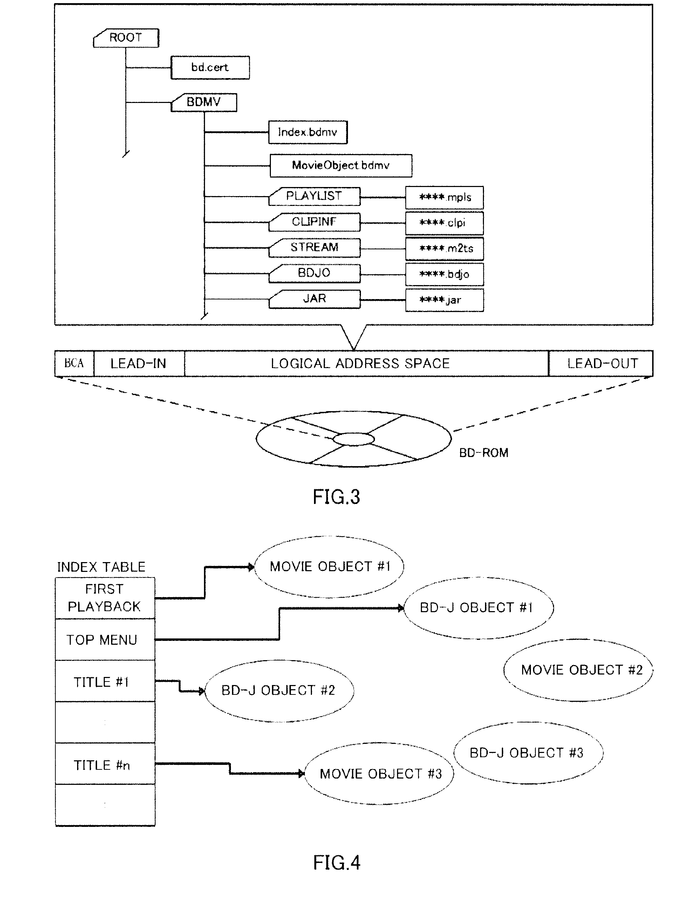

Next, a BD-ROM disc file configuration will be described using FIG.3.

FIG.3 shows a configuration of a BD-ROM. A BD-ROM, like other optical discs such as DVDs and CDs, has a recording area that is spiral in shape from the inner diameter to the outer diameter, and has a logical address space where data can be recorded, between a lead-in on the inner diameter and a lead-out on the outer diameter. Also, there is a special area that can be read only by a drive, called "burst cutting area" (BCA) on the inner of a lead-in. This area cannot be read from applications and therefore if often used for copyright protection technology.

In the logical address space, application data such as video data is recorded, with file system information (volume) at the beginning. The file system refers to, for example, UDF, ISO966 and so on. Like a regular PC, logical data that is recorded can be read using a directory and file structure, and file names and directory names of up to 255 characters can be read.

With the present embodiment, in the directory and file structure on a BD disc, a BDMV directory and a bd.cert file are placed right below a root directory (ROOT). The BDMV directory is a directory in which data that is dealt with in a BD-ROM, such as AV content and management information, is recorded, and the bd.cert file (file name fixed) is a certificate to use for signature verification upon merging content that is added for a virtual package with data on the BD-ROM.

There are five sub-directories under BDMV directory, called a PLAYLIST directory, a CLIPINF directory, a STREAM directory, a BDJO directory, and a JAR directory. In the BDMV directory, two kinds of files are placed, namely index.bdmv and MovieObject.bdmv.

Now, index.bdmv (file name fixed) will be described in more details below. index.bdmv is management information related to the entire BD-ROM. index.bdmv carries information such as organizationID (32 bits), which is an identifier to specify a provider of a movie work, and discID (128 bits), which is an identifier assigned to every BD-ROM provided by that provider. After a disc is inserted in a playback apparatus, index.bdmv is read first, and thereupon the playback apparatus recognizes the disc uniquely. In addition, index.bdmv includes a table associating a plurality of titles that can be played back on a BR-ROM, and BD-J objects that prescribe individual titles.

FIG.4 shows the relationships between index.bdmv files and titles. A title is a playback unit that is formed by combining an application and AV stream, and, in an index.bdmv file, the title structure on the disc is written. The reference relationships between titles on the disc and corresponding applications (for example, a Java^{™} application for a BD-J mode title, a scenario program for an HDMV mode title, and so on) are managed. Also, there are special titles such as "First Playback" and "Top Menu." "First Playback" is a title that is played back automatically when a BD is started, and is primarily used to display the terms of use of a BD. "Top Menu" is played back when a menu key on a remote controller is pressed or when a playback of a title is finished, and is used primarily to select a title or select a language for caption and audio. When the content of this index.bdmv file is changed duet to an update of a virtual package, different title structures are present before and after the virtual package updating.

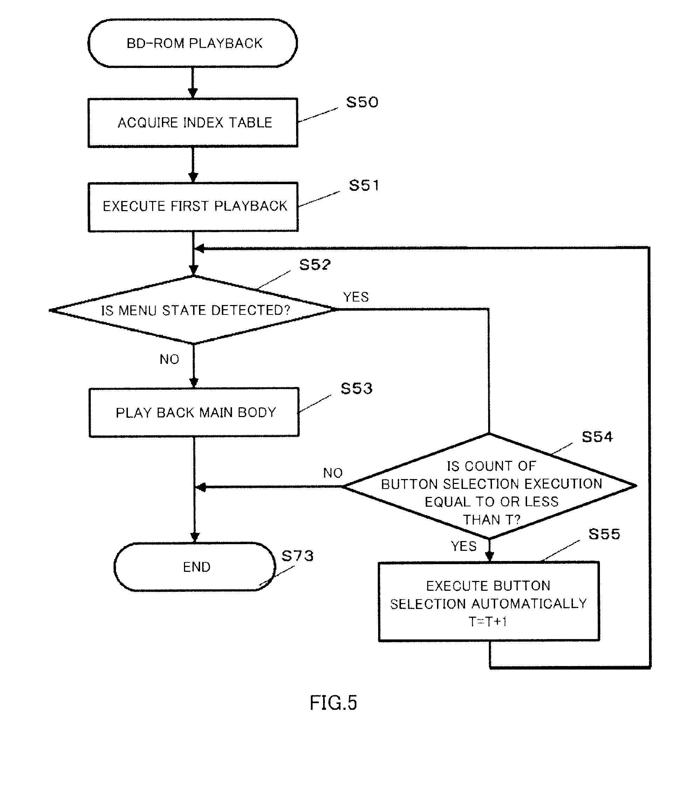

In the operations of disc playback apparatus 100 configured as described above, those that are common between an HDMV mode title and a BD-J mode title will be described using the flowchart of FIG.5.

For example, when video such as a movie or similar work is played back, an index table is acquired, as shown in FIG.4, in which information about the content of a disc is written (step S50). If there is "First Playback" in the acquired index table, operations to match the commands written in that "First Playback" are performed (step S51).

In the event a disc is configured in "First Playback" to play back a menu screen before playing back the main body of a movie or similar work, a transition to a menu state is made. By analyzing the playlist structure from the output of signal processing means 15, menu detecting means 17 decides whether or not a transition to a menu state has been made (step S52), and tells control means 17 when a menu state is present. If a disc is not configured to play back a menu screen before the main body of a movie or similar work is played back, a quick transition to a playback of the main body is made (step S53).

When a change to a menu state is reported to control means 19, whether or not the number of times a button selection is executed is equal to or less than T is determined (step S54), and, if that number of times or count is equal to or less than T, the main entity side (i.e. player) automatically executes a button selection by means of button selection executing means 18 (step S55). Then, the output of menu detecting means 17 is reset, and, back to step S52 of detecting in menu detecting means 17 whether or not a transition to a menu state has been made, if a menu state is not present, the step moves to a playback of the main body (step S53). On the other hand, if menu detecting means 17 detects a menu state, the processings of step 54 and step S 55 are repeated. Button decision execution count T is preferably set approximately 5, based on the layers of menus, and this will be described later.

Usually, when provision is made so that, after a button selection is executed on a menu screen, the menu screen transitions to another menu screen again, a lower layer menu screen also displays a plurality of buttons, and, by allowing a user to execute a button selection, a transition to a subsequent state is made according the selected button. Also, although general discs are configured to play back a menu screen shortly after a disc is inserted, with the majority of these, buttons for playing back the main body of a movie or similar work are selected in advance on a lower layer menu screen. Consequently, with a configuration of two or more layers, a transition to a playback of the main body is possible.

Also, provision may be made so that a button selection is not executed unless the count of button selection executions is equal to or less than T, and, by this means, a disc that is configured to repeat a menu screen can be prevented from misoperating.

Also, provision may be made so that the count of button selections is incremented only when button selecting processing by button selection executing means 18 is valid. By this means, it is possible to prevent a case where a button selection is executed in a time period in which a button selection is not allowed and where as a result of this the count of button selection executions is unnecessarily incremented.

Next, the operations of menu detecting means 17 will be described. As mentioned earlier, BD-ROM discs roughly have HDMV mode titles and BD-J mode titles. Also, the top menu of a BD-ROM disc is prescribed, by a standard, to assign "0" as a title number.

In an HDMV mode title, title numbers are written in an index table on a per title basis. Menu detecting means 17 decides whether the screen assumes a menu state by checking whether a title number that is being played back is "0."

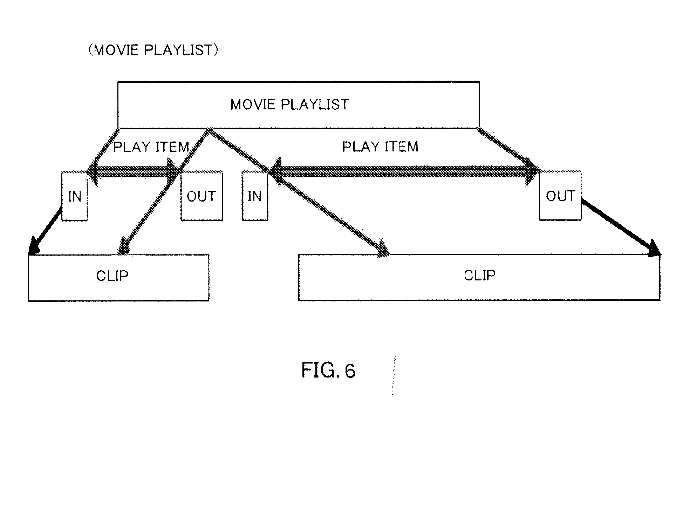

However, in a BD-J mode title, title numbers are not written on a per title basis in an index table, and, instead, file names to be played back are written. Menu detecting means 17 cannot detect a title number that is being played back and therefore cannot decide whether the screen assumes a menu state. With the present embodiment, whether a menu state is present is decided by analyzing the structure of the movie playlist shown in FIG.6.

As shown in FIG.6, an HDMV mode title and a BD-J mode title are composed of one movie playlist or a plurality of playlists. Furthermore, each movie playlist is composed of one play item or a plurality of play items. A play item carries information about the playback start position ("In") and playback end position ("Out") of a given clip. By this means, a movie playlist makes it possible to connect only parts that a user wants to play back from a plurality of clips, in an arbitrary fashion, and play back these parts. A clip is one video unit.

Furthermore, a movie playlist for playing back a menu screen most commonly implements a menu screen by repeating the same play item a plurality of times. Menu detecting means 17 analyzes the structure of a movie playlist. For example, it is possible to decide that a menu state is present when the same playlist is repeated twenty times or more.

As described above, the disc playback apparatus and disc playback method according to the present embodiment provide an advantage of making it possible to automatically start playing back content such as a BD-J title, especially the main body of a movie or similar work. Heretofore it has not been possible to detect a transition to a menu state and therefore it has not been possible to switch to a playback operation unless a user selects a playback of the main content of a movie or similar work through operation. The present embodiment solves this conventional problem.

The disclosure of Japanese Patent Application No. 2009-153394, filed on June 29, 2009, including the specification, drawings and abstract, is incorporated herein by reference in its entirety.

### Industrial Applicability

As described above, the disc playback apparatus and disc playback method according to the present invention are useful as a playback apparatus for playing back data that is recorded in a recording medium such as a BD-ROM disc and a method for playing back data that is recorded in that recording medium.

### Reference Signs List

10 Disc
11 Pickup
12 Servo
13 Local storage
14 Network interface
15 Signal processing means
16 Playback means
17 Menu detecting means
18 Button selection executing means
19 Control means
20 BD-ROM player model layer
22 HDMV module
23 BD-J module
24 BD-ROM resident system software layer
25 Resident application
26 Binding unit data area
27 Network
28 Disc
29 BD-J application

## Claims

1. A disc playback apparatus to play back content automatically, comprising:
a menu detecting section that analyzes a structure of a movie playlist when a disc playback operation starts and decides that a menu state is present when a same play item is repeated a plurality of times; and
a button selection executing section that automatically executes a button selection when the menu detecting section decides that the menu state is present.

2. The disc playback apparatus according to claim 1, wherein the button selection executing section keeps the number of times the button selection is executed, and stops executing the button selection and finishes processing when the number of times the button selection is executed exceeds a predetermined number of times.

3. The disc playback apparatus according to claim 1, wherein the menu detecting section analyzes the structure of the movie playlist when content of the disc comprises a blu-ray disc Java mode title.

4. A disc playback method for playing back content automatically, comprising:
a menu detecting step of analyzing a structure of a movie playlist when a disc playback operation starts and deciding that a menu state is present when a same play item is repeated a plurality of times; and
a button selection executing step of automatically executing a button selection when the menu state is decided to be present in the menu detecting step.
